# EUROPEAN PATENT SPECIFICATION

(11) **EP 3 466 190 B1**
(45) Date of publication and mention of the grant of the patent: **03.08.2022**
(21) Application number: 16727175.8
(22) Date of filing: 02.06.2016
(51) Int. Cl.: H04W 76/25, H04W 8/06, H04W 88/14, H04W 92/04, H04W 8/24

(54) **CONNECTIVITY CONTROL FOR MOBILE ENTITIES**
KONNEKTIVITÄTSSTEUERUNG FÜR MOBILE ENTITÄTEN
CONTRÔLE DE CONNECTIVITÉ POUR ENTITÉS MOBILES

(43) Date of publication of application: 10.04.2019
(73) Proprietor: Telefonaktiebolaget LM Ericsson (PUBL), 164 83 Stockholm (SE)
(72) Inventor: MIKLOS, György, 2097 Pilisborosjenö (HU)
(74) Representative: Ericsson
(86) International application number: PCT/EP2016/062475
(87) International publication number: WO 2017/207051

(56) References cited:
- EP-A2- 2 538 719
- WO-A1-2017/148369
- US-A1- 2012 302 230
- US-A1- 2013 188 503
- US-A1- 2013 301 540
- US-A1- 2015 173 111
- US-A1- 2015 382 242
- US-A1- 2016 119 830

## Description

### Technical Field

The present invention relates to a method for operating a mobile entity, to the corresponding mobile entity and a computer program.

### Background

Today's mobile network architectures are separated into a Radio Access Network (RAN) and Core Network (CN), each with different properties regarding deployment and handling of UE (User Equipment or user entity, or also called mobile entity hereinafter) contexts, i.e., state information associated with a given UE. The CN is typically deployed at central locations, and CN entities hold permanent state information for UEs. In particular, the HSS (Home Subscriber Server) and the related authentication center holds user credentials for all subscribers irrespective of whether the user is attached to the network or not. Other control and user plane entities in the CN such as the MME (Mobility Management Entity), SGW (Serving Gateway), PGW (Packet data network Gateway) in the case of 4G networks hold context for the UE as long as the UE is attached to the network and has data connectivity. In this way, contexts in the CN are long-lived and can be regarded as permanent.

The RAN nodes, i.e. the eNBs (eNodeBs) in the case of 4G/LTE networks, are distributed in the network's radio coverage area. RAN nodes hold a context for a UE as long as the UE is connected to RAN. The UE may transition from connected mode to idle mode, and in that case the RAN context is released. The RAN context is re-established when the UE has data to send or receive, and becomes connected again. In many networks, the inactivity timeout for transitioning from connected mode to idle mode is set to quite a low period, e.g. 10 seconds, meaning that the UE context in the RAN can be regarded as short-lived or temporary. Also note that the UE may lose RAN coverage any time - when RAN coverage cannot be established for a threshold period of time, the RAN context will be automatically released.

Accordingly the CN holds permanent contexts for UEs at central locations, while the RAN holds temporary contexts for UEs at distributed locations. Due to user mobility, the RAN context is often moved between RAN nodes, while the CN context typically remains unchanged at a CN entity for longer periods of time except for the infrequent cases of wide area user mobility.

This design has proven to be very useful for modularizing the system. On the other hand, system or product optimizations which combine RAN and CN entities are difficult due to the inherent differences in the way RAN and CN handles the UE context information.

Current trends however can add more flexibility to network design and deployment options.
- In the RAN more centralized solutions are being investigated. E.g., a central baseband processing unit is connected to distributed antenna systems, allowing a bigger coverage area to be served by a single RAN entity.
- CN entities become software based, and can run on a number of different platforms. This allows CN functions to be run not only on dedicated hardware, but also in data centers either run by the operator or by third parties. This gives flexibility to run CN functions wherever it is most cost-efficient for the operator. Software based solutions are more flexible for rapid introduction of new features.

Transitions between idle and connected states lead to signaling between RAN and CN entities to synchronize the state information. For 4G/LTE networks, the states between the eNB, MME and SGW need to be kept in synch, and the corresponding signaling could amount to as much as half of the total signaling load handled by the system. Hence, the separation of these entities leads to a significant processing overhead. In several network deployments, this is seen as a significant problem by the operator.

With separate RAN and CN functions, adding a feature often introduces a dependency between the RAN and CN implementations. This is especially problematic if they come from different vendors, as the operator needs to rely on multiple suppliers, and may even have to co-ordinate the product releases.

WO 2012/050493 describes a GW selection process where, among other things, the GW selection can be performed differently for stationary or mobile terminals.

The 3GPP has defined the SIPTO feature (Selective IP Traffic Offload), which can also be performed locally, described in 3GPP TS 23.401 section 4.3.15a. This solution allows the setup of a PDN connectivity using a Local GW (LGW) which can be co-located with an eNB. The Local GW contains a subset of the PGW functionality.

EP 2 709 404 A1 discloses a method including a detach and re-attach depending on the UE's mobile/stationary status to trigger a re-selection of the GW.

Also, the relocation of the Serving GW (SGW) is possible so that the SGW becomes local, i.e., possibly co-located with the eNB for a stationary terminal. Such a relocation can be carried out using the MME triggered Serving GW relocation procedure defined in 3GPP TS 23.401 section 5.10.4. That procedure allows the relocation of the SGW function when the UE does not perform mobility. That is the case when the UE remains stationary for a threshold period of time.

US 2016/0119830 A 1 discloses a radio terminal which selects a new MME suitable for performing a mobility management. US 2013/0301540 A1 discloses a user device storing information indicating whether the user device is stationary or mobile. US 2013/0188503 disclsoes that a determination of a mobility state of a UE is determined. WO 2017/148369 A1 discloses a method for determining a no-mobility status for a UE, wherein when it is determined that the UE is no longer in the no-mobility status, an indication is transmitted to the network.

The above mentioned solutions all have certain drawbacks. Accordingly, a need exists to overcome the drawbacks of the prior art and to provide a technique in which the UE is connected to an appropriate control plane signaling entity during and after a low mobility..

### Summary

This need is met by the features of the independent claims. Further aspects are described in the dependent claims.

According to an embodiment a method for operating a mobile entity in the cellular network is provided as mentioned in claim 1, wherein the mobile entity determines that it has become mobile within the cellular network. The mobile entity inter alia transmits an indication to a radio access network of the cellular network indicating that the mobile entity has become mobile. The indication indicates to the cellular network that a control plane signalling towards the mobile entity should be transferred from a currently used network entity to another network entity of the cellular network.

The step that the mobile entity determines that it has become mobile is preferably carried out after the mobile was stationary. When the mobile entity is then mobile again, it becomes necessary to indicate this to the cellular network so that the cellular network can react accordingly and can remove the control plane signalling from the currently used network entity which is used for the control plane signalling as long as the mobile entity is stationary. In this embodiment the mobile entity provides an explicit indication to the cellular network that the control plane signalling towards the mobile entity should be shifted to another network entity. Accordingly this is not determined any more by the cellular network alone, but the mobile entity gives a hint that a relocation of the control plane signalling might become necessary.

Furthermore the corresponding mobile entity is provided which comprises a memory and at least one processor, wherein the memory contains instructions executable by the at least one processor wherein the mobile entity is operative to function as mentioned above and as described in further detail below.

Additionally a computer program comprising program code which can be executed by at least one processing unit of a mobile entity or of a radio access node is provided, wherein execution of the programme code causes the at least one processing unit to execute a method as mentioned above or as mentioned in further detail below.

It is to be understood that the features mentioned above or features yet to be explained below can be used not only in the respective combinations indicated, but also in other combinations or isolation without departing from the scope of the present application. The features of the above mentioned aspect embodiments may be combined with each other in other embodiments unless explicitly mentioned otherwise.

### Brief Description of the Drawings

The foregoing and additional features and effects of the application will become apparent from the following detailed description when read in conjunction with the accompanying drawings in which like reference numbers refer to like elements.
Figure 1 shows a high level architecture of a system in which a local control plane signalling entity is used for stationary mobile entities.
Figure 2 shows another example of a high level architecture of a system in which a local control plane signalling entity is used for stationary mobile entities.
Figure 3 shows another example of a high level architecture in which a local control plane signalling entity is used for stationary mobile entities.
Figure 4 shows a first alternative of a high level architecture of a system for a relationship of a control area of a stationary control plane signalling entity and a tracking area in the radio access network.
Figure 5 shows a second alternative regarding the relationship in the system of Figure 4.
Figure 6 shows a message flow between involved entities in a situation where a mobile entity becomes stationary and is not affected by a selection of a local control plane signalling entity.
Figure 7 shows a message flow between involved entities in a situation of figure 6 where the mobile entity becomes mobile again.
Figure 8 shows a message flow between involved entities when the mobile entity becomes stationary in a further example where the mobile entity is not affected by a selection of a local control plane signalling entity.
Figure 9 shows a message flow between involved entities when the mobile entity becomes mobile and the local control plane signalling entity initiates the signalling.
Figure 10 shows a message flow between involved entities when the mobile entity becomes stationary and a local control plane signalling entity is selected, wherein the mobile entity is affected by the method, with the mobile entity being in the idle mode.
Figure 11 shows a message flow between involved entities when the mobile entity becomes mobile again, with the mobile entity being in the idle mode.
Figure 12 shows a message flow between involved entities when the mobile entity becomes stationary and there is a data connection.
Figure 13 shows a message flow between involved entities when the mobile entity becomes mobile, with the mobile entity having a data connection.
Figure 14 shows an example architectural view of a mobile entity involved in the above message flow and which indicates to the cellular network that it has become stationary
Figure 15 shows an example architectural view of a radio access node involved the above message flows.
Figure 16 shows a further architectural view of a mobile entity involved in the above discussed message flows and which indicates to the cellular network that it has become stationary.
Figure 17 shows another architectural view of a radio access node involved in the above discussed message flows.
Figure 18 shows still another architectural view of a radio access node involved in the above discussed message flows.

### Detailed Description of Embodiments

In the following, embodiments of the invention will be described in detail with reference to the accompanying drawings. It is to be understood that the following description of embodiments is not to be taken in a limiting sense. The scope of the invention is not intended to be limited by the embodiments described hereafter or by the drawings which are to be taken demonstratively only.

The drawings are to be regarded as being representations and elements illustrated in the drawings are not necessarily shown to scale. Rather, the various elements are represented such that their function and a general purpose become apparent to a person skilled in the art. Any connection or coupling between functional blocks, devices, components or physical functional units shown in the drawings or described herein may be implemented by an indirect connection or coupling. A coupling between components may be established over a wired or wireless connection. Furthermore, functional blocks may be implemented in hardware, software, firmware, or a combination thereof.

In the following a solution is provided that is based on differentiating mobile entities (UEs) that move around and for which an entity responsible for a control plane signaling changes and stationary mobile entities/users. Mobile users can be handled similarly as today, by central CN entities and distributed RAN entities. For stationary mobile entities, it is possible to make CN functionality local. This means that the CN functionality could be co-located with the RAN node, or the CN functionality could be relocated to a local entity nearby the RAN node. Whether a given UE is mobile or stationary can change over time; the solution can automatically adapt to the current situation of the UE using configurable parameters. In the following description the relocation of the CN control plane entity is carried out; the relocation of the user plane together with the control plane may be regarded as an optional example.

The solution can apply to existing mobile system architectures such as 3G or 4G, or possible future architectures such as 5G. Without loss of generality, the solution will be described for 4G where the RAN comprises eNBs and the CN comprises MME and HSS in the control plane and SGWs and PGWs in the user plane. In the following no focus will be put on other system entities such as the PCRF but they are not excluded. It should be clear for those skilled in the art that the solution can be applied for other systems such as 3G or 5G systems in a similar way, and the solution can be generalized for other system functions as well. There is no widely agreed terminology for 5G entities, but in case of 5G a general control plane signaling entity may correspond to the MME and one or more user plane entities may correspond to the SGW, whereas a radio baseband processing unit may correspond to the eNB - that scenario is also covered by this invention.

Also, it may be possible to vary the scope of the solution. Below it is considered that the full MME functionality and optionally the SGW functionality is moved to a local site close to RAN, while the PGW and HSS functionality remains in the CN. However, it could be possible to apply the solution in other ways as well, e.g., to apply only to a subset of the MME functionality, such as e.g., the subset of the control plane which is responsible for signaling with the UE and/or the RAN. Similarly, the solution can apply to a subset of the SGW functionality that is optionally relocated, or apply to other user plane functionality as well. Note also that the MME functionality and/or SGW functionality in the future may be decomposed into a set of network entities. The solution may be applicable to any subset of these entities, where one or more of these entities may be relocated together.

The application describes the relocation of the CN control plane when the UE becomes stationary. Additionally a solution is provided for the reverse case when a stationary UE becomes mobile. The relocation of the user plane functionality is also discussed and it is shown that the part of the user plane functionality can be relocated in combination with the relocation of the control plane.

The solution aims at using a stationary control plane signaling entity also called local MME entity (LMME) while the UE is stationary, and using another control plane signaling entity, a central MME, for mobile UEs. In combination with this, the solution may also use a local SGW entity (LSGW) while the UE is stationary, and a central SGW for mobile UEs. It is up to an operator to configure where the local and central entities are deployed.

It can be possible for a LMME and/or a LSGW to be co-located with an eNB. This can give simplicity, efficiency and cost benefits. The co-located case can be regarded as one special case - below the general possibility is described where the LMME and LSGW are located close to the eNB, but it will always be possible to co-locate the LMME and the LSGW with the eNB. The messages going between these local entities will also be discussed. In case of co-location, messages between co-located entities become internal and hence may be skipped, or replaced by proprietary implementations as appropriate. It may also be possible to replace the signaling between local entities by other proprietary signaling than what is shown, especially if these entities originate from the same vendor.

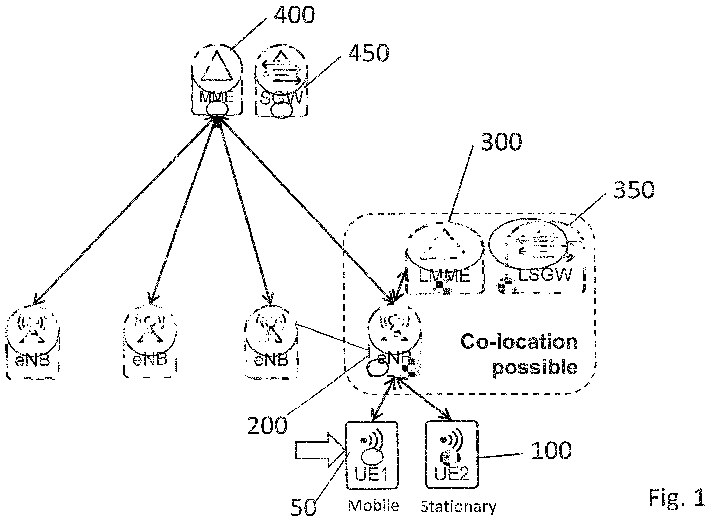

Fig. 1 shows the basic concept of the invention. In Fig. 1 the SGW functionality in the user plane is also relocated together with the control plane for stationary users, but it should be understood that the relocation of the user plane is regarded as optional. UE 50 is mobile, and moves between eNBs. Such a mobile UE 50 is served by a central MME 400 and SGW 450, which in that way efficiently handle the UE mobility. The UE contexts at the central MME 400 and SGW 450, as well as the RAN context at the eNB for UE 50, are shown in empty dots. UE 100 stays at an eNB 200 for a longer period of time and hence can be considered stationary. Such a stationary UE is served by a local MME, called LMME 300 and LSGW node 350. The LMME is the local network entity that takes over the control plane signaling when the UE has become stationary and as long it is stationary. It is possible that the LMME 300 and LSGW nodes 350 are co-located with the eNB 200, even though the invention will be described for the generic case where the LMME 300, LSGW 350 and eNB 200 need not to necessarily be co-located even though they may be located nearby. Such co-location or local placement can allow for more optimized products and allows the reduction of the signaling load as well. The UE contexts for UE 100 which are handled locally are shown in full dots. Note that there may be a pool of MMEs used rather than a single MME 400 for a given area, and similarly it is possible to use a pool of local LMMEs 300 for a given area rather than a single LMME.

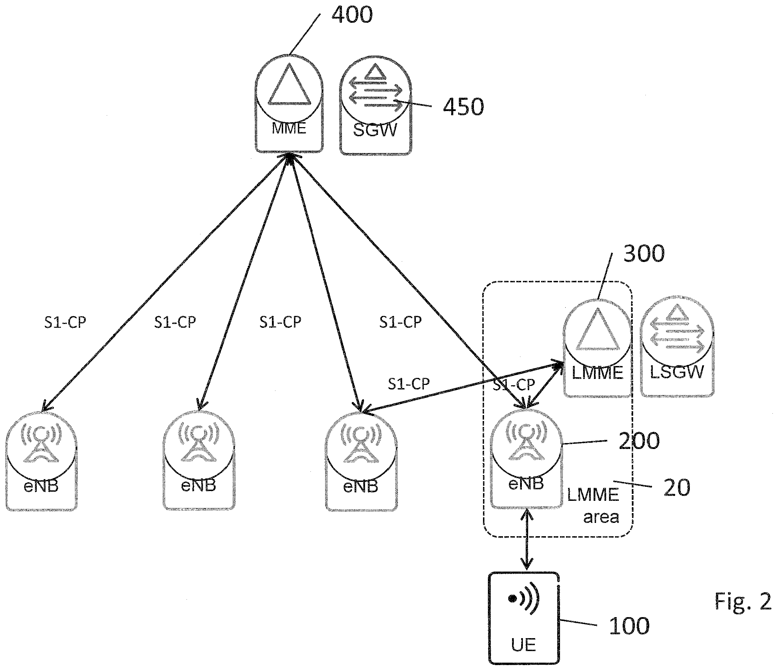

The LMME is used for stationary UEs in case the UE stays within the "LMME area", i.e., a given set of eNBs. This is shown in Fig. 2. In this case, the LMME area 20 contains a single eNB 200. This could be the case e.g., when the LMME 300 is co-located with that eNB 200. Note that it is possible that the LMME has S1 control plane connectivity with other eNBs as well outside the LMME area 20.

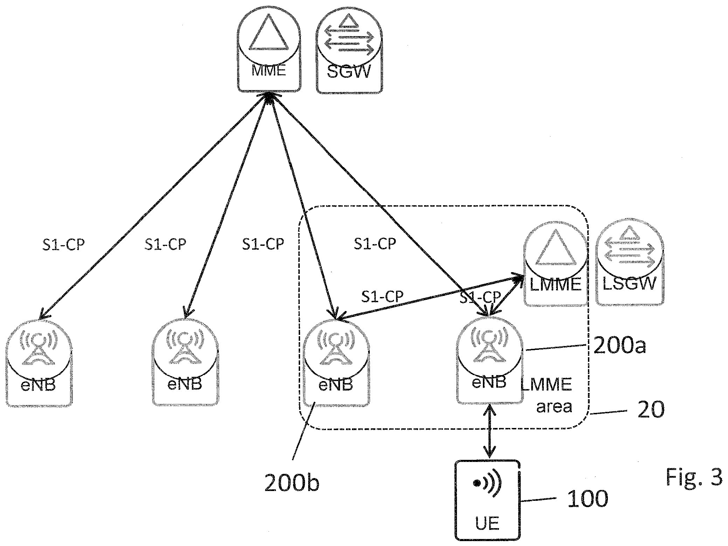

Fig. 3 shows another example where the LMME area 20 contains multiple eNBs 200a, 200b. When a UE 100 is detected as stationary within the set of the eNBs in the LMME area 20, then the LMME 300 will be used. An example for an LMME area with multiple eNBs could be an industrial local network.

For the detection of stationary UEs, it is possible to use many criteria. A UE 100 could be regarded stationary when it stays for a longer period of time at a given eNB within the LMME area. Alternatively, a UE could be regarded as stationary when it stays for a longer period of time at any eNB within the LMME area, irrespective of mobility between the eNBs of the LMME area. A UE can be considered stationary when it says with the same eNB for a time period which can be e.g. any time period between 10 and 30 min.

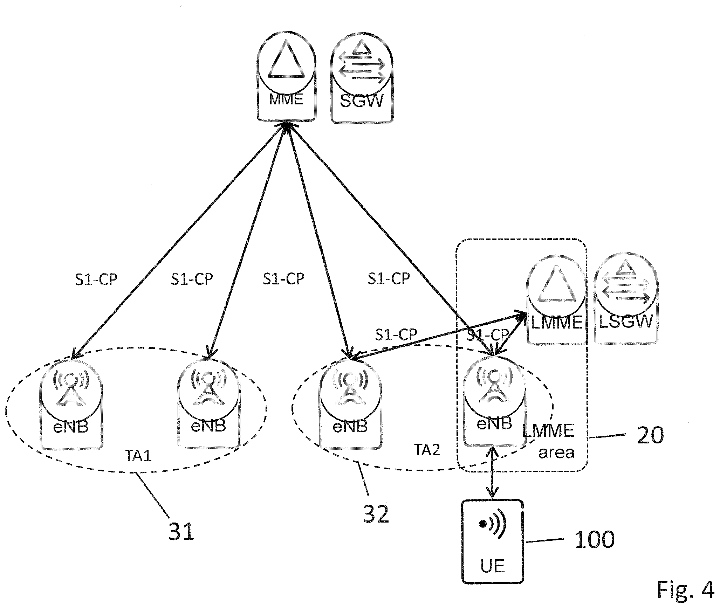

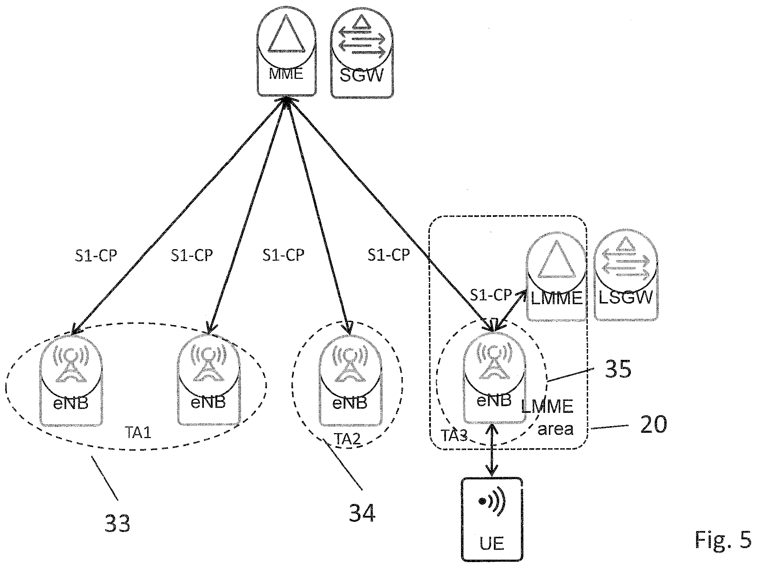

As shown in Figures 4 and 5 there are two alternatives regarding the relationship of the LMME area 20 and Tracking Areas (TA) 31 to 35 configured in the RAN. In alternative 1, the LMME area 20 may be smaller than a TA 32, as shown in Fig. 4 This is a possible case for the solution, but in this case the LMME 300 needs to have S1 connectivity set up not only with the eNBs in the LMME area 20, but also other eNBs in the same TA. That is necessary to handle idle mode, since a UE in idle mode may at any time re-select a cell in its tracking area 32, and the LMME needs to be able to page such UEs.

In alternative 2, the network is configured such that an LMME area 20 always contains a full TA such as area 35, as shown in Fig. 5. By way of example, if the LMME area contains a single eNB 200, that eNB also constitutes a full TA. In this case, the LMME 300 already has S1 connectivity to the eNBs in the same TA, hence there is no need for S1 connectivity to eNBs outside the LMME area (even though such connectivity is not excluded).

In the above discussion a connection-oriented control channel between the RAN and CN was considered, as today with S1-CP using SCTP. In the future, it could be possible to define control messaging between CN and RAN without a pre-established control connection, in which case the issues regarding pre-established control connectivity are no longer present.

In the description the focus is on the control plane and the relocation between MME and LMME. The user plane functionality (SGW) placement is under the control of the control plane. Once the control plane entity is selected, it can flexibly relocate the SGW as needed. Alternatively, even if the control plane entity is not relocated, the user plane can still be re-located. Since the user plane placement is very flexible, this is not elaborated in detail.

The solution has one main embodiment: one comparative example not covered by the invention which does not require UE activity or cooperation and one which does.

The example and the embodiment will be treated separately below. In both cases it is shown how a UE which is originally mobile and uses central CN entities can become stationary using local CN entities, and vice versa how a stationary UE using local CN entities can become mobile and use central CN entities.

### Comparative Example without mobile entity cooperation

Mobile entity becomes stationary

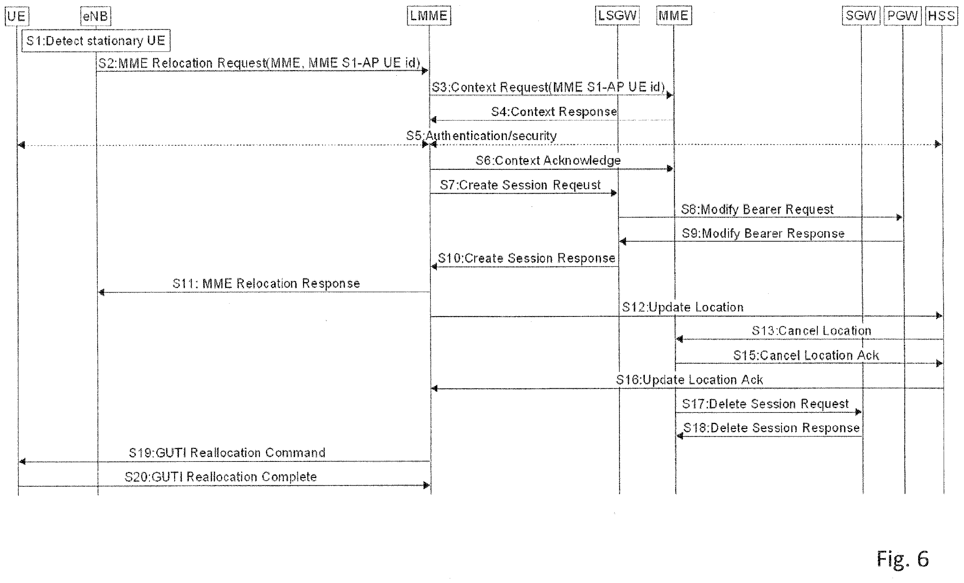

Fig. 6 shows the signaling diagram for the solution which relocates the MME entity to a LMME entity such as LMME 300 of Figs. 1 to 4 and the SGW entity to a LSGW as the UE becomes stationary at an eNB. The steps are elaborated below. This procedure is triggered when a UE is connected to the eNB.

Step S1: The eNB detects that the UE is stationary at the given eNB. There can be many ways how this determination is made; for example the following criteria can be used.
- This determination could be based on a timing criteria at the eNB: the UE is considered stationary if it has been connected at the eNB for a configurable minimal amount of time. The eNB can make such a determination on its own.
- It is also possible that the MME helps the eNB to make the decision about whether the UE is stationary or not. The motivation for involving the MME can be that the UE which has only little data to transmit can quickly transition to idle mode and the eNB does not know whether the UE has been connected at another eNB or not. The MME can know that and in this way the MME can have more information about deciding whether or not the UE is stationary. The MME can check whether in a configurable period of time the UE has been seen at any other eNB (either for data transmission, or for signaling only). If not, the MME could indicate to the eNB that the UE is considered stationary - this is shown as an optional step S0. In this case the eNB can just rely on the MME's indication about whether the UE is stationary.
- It is also possible that the MME makes an indication to the eNB during the establishment of the RAN context when the UE has been last seen at any other eNB, and that information is taken into account in the eNB. Then the eNB can decide when a period of time expires during which the UE has not been at any other eNB.
- It is possible to take into account other criteria as well in the detection of stationary UEs. E.g., it can be possible to define different subscription classes, and apply different parameter settings (time period) for each class. Such subscription class can be downloaded from HSS and sent to an eNB. Also, it could be possible to apply data analytics to historical UE mobility patters to predict where a given UE is likely to stay stationary. In case there is a high likelihood that a given UE is going to be stationary at a given eNB, it is possible to apply a shorter time threshold for the evaluation of the stationary condition.
- Also, it is possible to disregard mobility between a given set of eNBs, and regard the UE stationary when it only moves between the eNBs in the given set. This could be the case e.g., for a local industrial network containing a few eNBs, where the UE could be regarded as stationary whenever it remains connected to the given set of eNBs, irrespective of any mobility between those eNBs.
- Note also that the solution can be also extended for using other criteria than stationarity of the UE, e.g., changes in the subscription or usage pattern of the device could also trigger the actions described in this invention.

Step S2: The eNB selects a LMME for the stationary UE. In case there is a single LMME only for the eNB, the selection is straight forward - this is the case e.g. when the LMME is co-located with the eNB. If there are multiple LMME entities available, the selection can be based on e.g., random selection which could also consider load balancing weights (as for regular MME selection), or the solution could also use a weighted round robin scheme as well - other selection methods are also available. The eNB sends a message MME Relocation Request to the selected LMME. This is a new type of message. As parameters, the eNB gives the MME's identity and an identity of the UE at the given MME, which can be the MME S1-AP (Application Protocol) UE id. The eNB also starts the establishment of the S1 connection between the eNB and the LMME by assigning an eNB S1-AP UE id. This also means that the old S1 connectivity between the eNB and the MME is no longer used for the given UE (any control message from the MME would result in an error response).

Step S3: The LMME initiates the context transfer from the MME to the LMME by sending the Context Request message to the MME, giving the MME S1-AP UE id to identify the UE at the MME. This is a message, wherein the use of the MME S1-AP UE id is one new aspect of the invention. Preferably an alternative UE identifier is used instead of the IMSI or GUTI, since those other UE identifiers are not known in the eNB and consequently cannot be available at the LMME.

Step S4: The MME looks up the UE context based on the MME S1-AP UE id as the key, and returns the UE context to the LMME.

Step S5: The LMME may optionally perform authentication and security procedures, though this is not needed in general. This can be used e.g., in case the LMME has different security requirements than the MME.

Step S6: The LMME acknowledges the reception of the context to the MME.

Step S7: The LMME relocates the SGW entity to the LSGW entity. The LSGW is selected by the LMME. In case this is a non-trivial selection, the selection can be done by configuration or by using DNS (Domain Name System) lookup mechanisms. It may happen that the LMME is co-located with the LSGW, in that case the selection is straight forward and this signaling may not be needed.

Step S8: The relocation of the SGW is indicated to the PGW, so that downlink packets can be now routed to the LSGW.

Step S9: Acknowledgement of the relocation of SGW.

Step S10: Acknowledgement of the establishment of the context at the LSGW. Similar considerations apply as in step S7.

Step S11: The LMME acknowledges the relocation of the MME functionality to the eNB. This message also gives the LMME S1-AP UE id, in order to complete the establishment of the S1 connectivity between eNB and LMME. This message may also include the LSGW's uplink user plane termination information.

Steps S12- S15: The LMME updates the location of the MME entity towards the HSS. The HSS cancels the old location at the MME. This also serves an indication for the MME that the context of the UE can be released after a guard time has passed.

Steps S16- S17: The MME releases the old context at the SGW which is no longer used.

Steps S18-S19: The LMME uses the GUTI Reallocation Command to assign a new GUTI (Globally Unique Temporary Id) for the UE. This is necessary, as the GUTI includes the GUMMEI (Globally Unique MME Id), which identifies the MME. By assigning a GUTI with the GUMMEI corresponding to the LMME, it is made sure that future signaling messages from the UE are routed to the LMME, and the GUTI can identify the UE context within the LMME.

The UE may later become idle and then become connected once again. As discussed earlier, the LMME always have S1 connectivity with all the eNBs that are in the same TA as the LMME area. For that reason, the LMME is able to page the UE when necessary. In case a TA list is applied for the UE, then the LMME only assigns TA lists with TAs that it has S1 connectivity with, in order to be able to page all TAs where the UE may be located. To keep this rule in the above procedure, the GUTI reallocation in steps S18-S19 may also be combined with a re-allocation of the TA list to the UE; that is needed in case the UE earlier had a TA list which included TAs to which the LMME has no S1 control plane connectivity.

### Mobile entity becomes mobile - alternative 1

A UE which has been stationary and is served by a LMME may become mobile again, and then the LMME and LSGW need to be relocated to the central MME and SGW entities for efficient handling of the UE. First alternative 1 is considered, as the general case when it is possible that the UE becomes mobile without leaving its TA. For the case when the UE becomes mobile and also leaves its TA, see the next section for solution options.

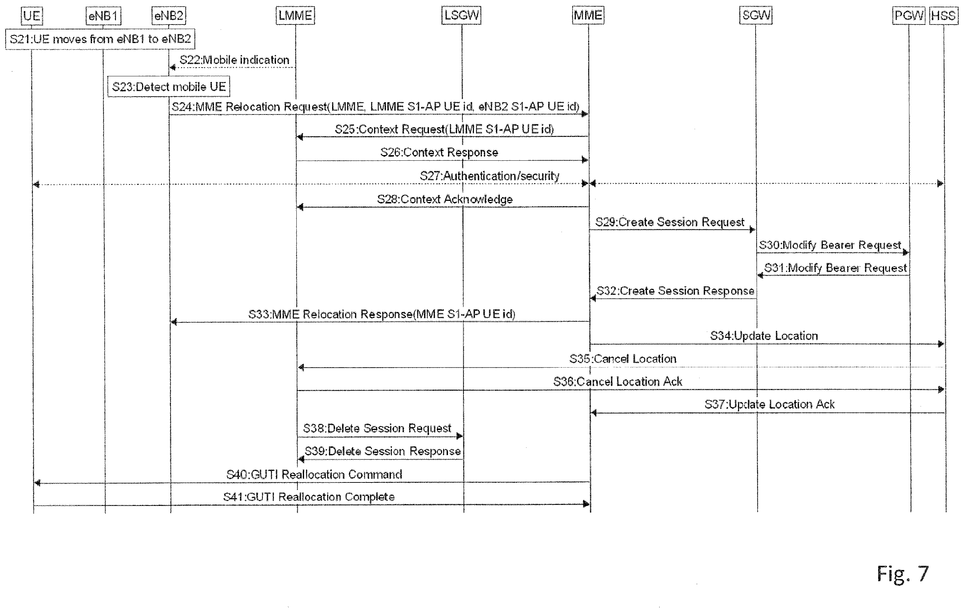

Fig. 7 shows the solution for this case. The solution relocates the local LMME and LSGW functions to the central MME and SGW entities. The solution is similar to the case described above with the relevant changes. Some steps are elaborated in more detail.

Step S21: The UE moves from its stationary location eNB1 to another eNB2. This may take place in two ways.
- In connected mode using the handover procedure. That procedure can be executed as described in TS 23.401 section 5.5.1.1.2, with the LMME playing the role of the MME and the LSGW playing the role of the SGW.
- In idle mode: the UE first transitions from connected mode to idle mode using the S1 release procedure (TS 23.401 section 5.3.5) followed by the Service request procedure at eNB2 to transition from idle mode to connected mode (TS 23.401 section 5.3.4), with the LMME playing the role of the MME and the LSGW playing the role of the SGW.

Steps S22-S23: eNB2 detects that the UE has become mobile and the local LMME and LSGW are no longer suitable. There can be several options how this determination is made.
- The mere fact of the UE connected to a new eNB2 using a local LMME may immediately trigger the detection of a mobile UE. This may be configured into the eNB2 such that all UEs with S1 connectivity to the given LMME would trigger the detection of the UE being mobile.
- It is possible to apply a timer in eNB2, so that a UE is detected as mobile only if it has spent a threshold amount of time in eNB2 while still using LMME. An advantage of using such a timer that in case a UE moves to eNB2 but then quickly moves back to eNB1 where it remains stationary does not unnecessary lead to relocation of the core network functions, thereby saving signaling load.
- It is possible for the LMME to also assist eNB2 in the determination of the UE being mobile, in a similar way as the MME can assist in the determination of a stationary UE. The LMME can indicate to eNB2 that the UE is mobile in case the UE has been away from eNB1 at other eNBs for a threshold amount of time (even if it moves back and forth between several eNBs and never stays at a given eNB for too much time), or if it performs a threshold amount of handovers, or other criteria is met. The LMME may also provide assistance data to the eNB for the determination of a mobile UE, such as the amount of time the UE has spent at eNBs different from eNB1.
- It can be possible to allow mobility between a set of eNBs and still keep the LMME, and only regard the UE as mobile when it moves out of the set of eNBs. This could be the case e.g., for local industrial networks composed of a few eNBs, for which a LMME can be used.

Step S24: eNB2 selects a new MME for the given UE. This step can follow MME selection procedures, e.g., select one of the available MMEs in the given MME pool using a random selection considering the pre-configured load balancing weights. eNB2 sends a message MME Relocation Request to the selected MME, giving the identity of the LMME and an identity of the UE at LMME (in this case LMME S1-AP UE id). The eNB2 also assigns an identifier eNB2 S1-AP UE id that is sent to the MME, in order to establish the new S1 signaling connection to the MME. The old signaling connection to the LMME should no longer be used - any control message from the LMME for the given UE should generate an error response. This message may also contain information about the eNB2's downlink user plane termination point address and port.

Steps S25 - S28: The MME fetches the context from the LMME using the identities received from eNB2 in step 24. It is possible to perform re-authentication at the MME, though this is not required in general.

Steps S29-S32: The MME may select a new SGW and establish the UE session at the new SGW which also notifies the PGW.

Steps S33: The MME responds to eNB2 and also specifies its UE identifier (MME S1-AP UE id). In this way, the new S1 control connection is set up between the eNB2 and the MME for the given UE. This message may also give the uplink user plane termination point at the new SGW.

Steps S34-S37: The HSS is updated about the new location of the MME function. The HSS cancels the location of the old LMME, which serves as a trigger to release the LMME's context. A guard timer can be used for this.

Steps S38-S39: Triggered by the cancel location signaling from the HSS, the LMME releases the context at the LSGW.

Steps S40 - S41: The MME assigns a new GUTI for the UE, which includes the identifier of the MME so that further control signaling from the UE will be directed to the MME.

In the above the following variation may be used: the Path Switch Request/Ack is bypassed in step S21 in case the handover procedure was used. As part of the normal handover procedure that can be executed in step S21, a Path Switch Request message would be sent from eNB2 to LMME, followed by Modify Bearer Request/Response signaling from the LMME, as a Path Switch Request Ack message from the LMME to the eNB2, as described in the general case for the handover procedure in TS 23.401 section 5.5.1.1.2. However, it is possible to skip these messages in step S21, since the MME Relocation Request/Response messages and the related signaling to the SGW can achieve a similar effect, i.e. the change of the user plane path.

### Mobile entity becomes mobile - alternative 2

This alternative considers the case when the UE becomes mobile and leaves its TA. This case can be handled by existing system procedures.
- For connected mode mobility, the S1 based handover procedure as specified in TS 23.401 section 5.5.1.2 can be executed. That procedure can incorporate both the change of the MME and the change of the SGW as part of the same handover procedure. The target MME in this case is selected by the current LMME, while the target SGW is selected by the target MME as earlier. Note that in this case the change of MME must be executed immediately, as part of the handover procedure, i.e., it is not possible to wait as in alternative 1 whether the UE moves back soon to the original eNB.
- For idle mode mobility, the Tracking Area Update procedure with Serving GW change as specified in TS 23.401 section 5.3.3.1 can be executed. That procedure can incorporate both the change of the MME and the change of the SGW as part of the same Tracking Area Update procedure. The target MME in this case is selected by the new eNB, while the target SGW is selected by the target MME as earlier. The new eNB detects that need for selecting a new MME either by not having S1-CP connectivity to the LMME, or by being outside the LMME area, which is known by local configuration.

A limitation of this approach though is that it requires the target eNB2 to belong to a different Tracking Area than the source eNB1 and also that the LMME cannot assign a TA list to the UE which includes eNB2's TA. This is a necessary assumption for both the S1 handover procedure and the Tracking Area Update procedure. Note that in case the LMME serves only a single eNB (e.g., the LMME is co-located with the eNB), then the eNB needs to have a TA of its own to apply this alternative - this could be a configuration constraint for the operator. However, if that eNB serves a relatively large geographical area, such a limitation might not be so difficult to satisfy.

### Variation: MME initiated signalling

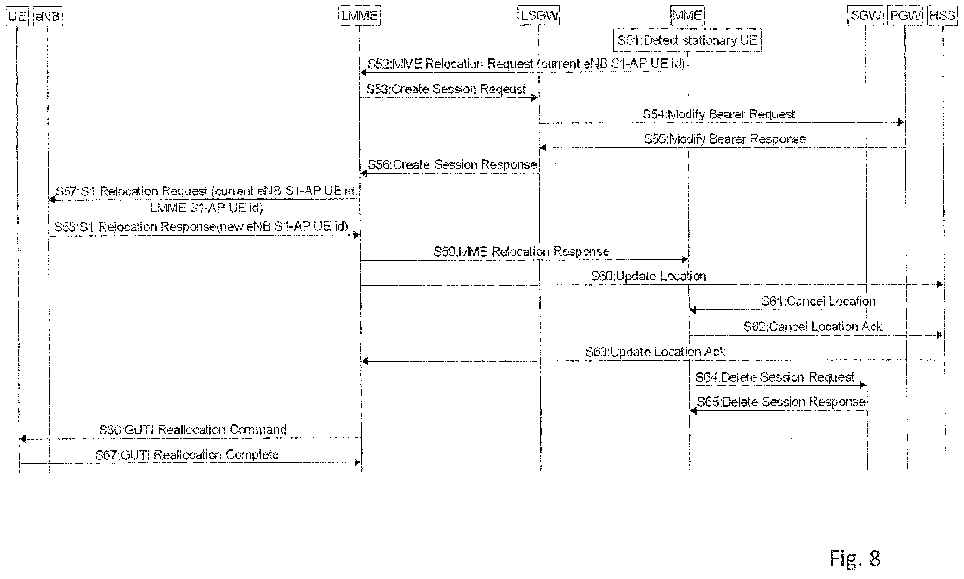

In the signaling charts of Fig. 6 and 7, the relocation of the MME function was initiated from the RAN (i.e., eNB). As another option, it is also possible to carry out the relocation process using signaling initiated from the MME. This is shown in Fig. 8 for the case that the UE becomes stationary.

The following steps are explained in more detail, the other steps not explained in detail were explained in detail above.

Step S51: The detection of stationary UE is made in the MME. This can use similar criteria as discussed earlier.

Step S52: An MME Relocation Request is sent from the MME to the LMME. This requires configuration (in the MME, or in some configuration server such as a DNS server), so that the MME can determine which LMME to use for a given eNB (and whether an LMME is deployed at all for the given eNB). The MME also supplies an identifier of the UE which is used at the eNB, such as the current eNB S1-AP UE id. The message include the UE context at the MME. From this point on, the old S1 connection between the eNB and the MME should not be used.

Step S57: The relocation of the S1 connection is carried out by an S1 Relocation Request message from the LMME to the eNB. The message identifies the UE by the current eNB S1-AP UE id, and also gives the new S1 identifier supplied by the LMME. This is a new type of message.

Step S58: The relocation of the S1 connection is acknowledged, and the eNB gives its new S1-AP UE id, which may differ from the old one.

Step S59. The MME relocation is acknowledged.

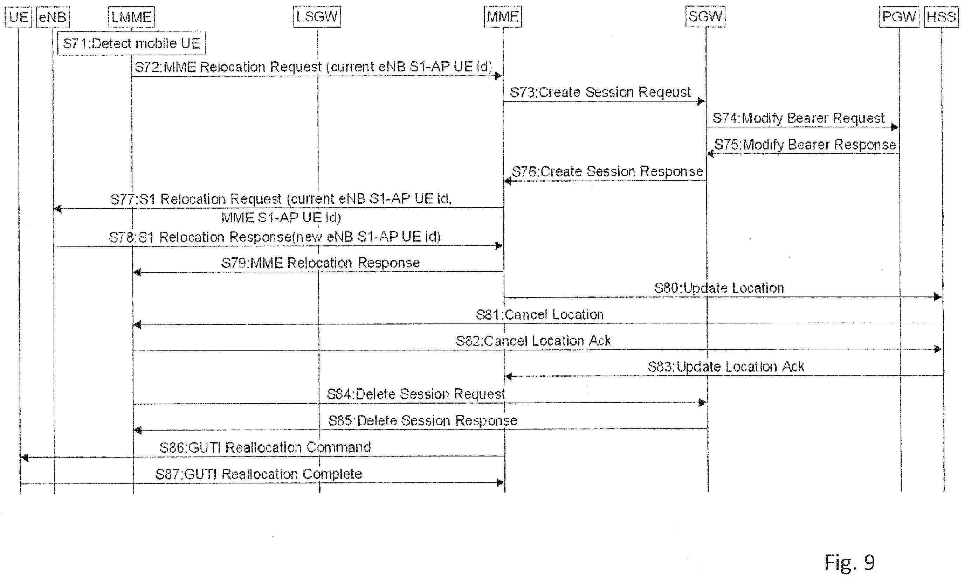

A similar procedure may be applied in the other direction with the relevant changes, to relocate the UE context from the LMME to the MME, as shown in Fig. 9

In Figure 9 the LMME detects that the UE becomes mobile so that in step S 62 the relocation request is transmitted to the MME. Steps S 73 to step S 76 correspond to the steps S 53 to S 56 with the difference that they are initiated by the MME. In the same way the relocation request in step S 77 is sent by the MME and not by the LMME as shown in figure 8. Steps S80 to steps S87 are similar to steps S34 to S41 of Fig: 7.

In Fig. 9 there is a bigger difference compared to existing system procedures. This approach not only requires the S1 relocation signaling (steps S77-S78), but also a new type of MME context transfer (steps S72/S79). This signaling is different from current Forward Relocation Request/Response messaging that is used in current S1 handover message, since that messaging is also complemented by a Forward Relocation Complete Notification/Ack message exchange which is not used in this case. Nevertheless, the MME initiated signaling option can be attractive in case an operator would like to have a bigger control of the local CN use from the central CN.

### Solution with mobile entity cooperation

In this approach, the detection of a stationary UE is done in the UE itself. An advantage of the UE based detection is that the procedures can get simplified and more aligned with existing procedures such as the procedures of an LTE/EPC system defined in 3 GPP TS 23.401 e.g. version 13.6.1. Another advantage is that the UE can detect being stationary at a cell even in idle mode. Yet another advantage is that the likelihood of race conditions can be reduced, since a UE will not initiate other procedures while a Tracking Area Update procedure is in progress, while with network-based solution the UE is not aware that a relocation procedure in the network is in progress and might initiate other procedures.

### UE becomes stationary, idle mode

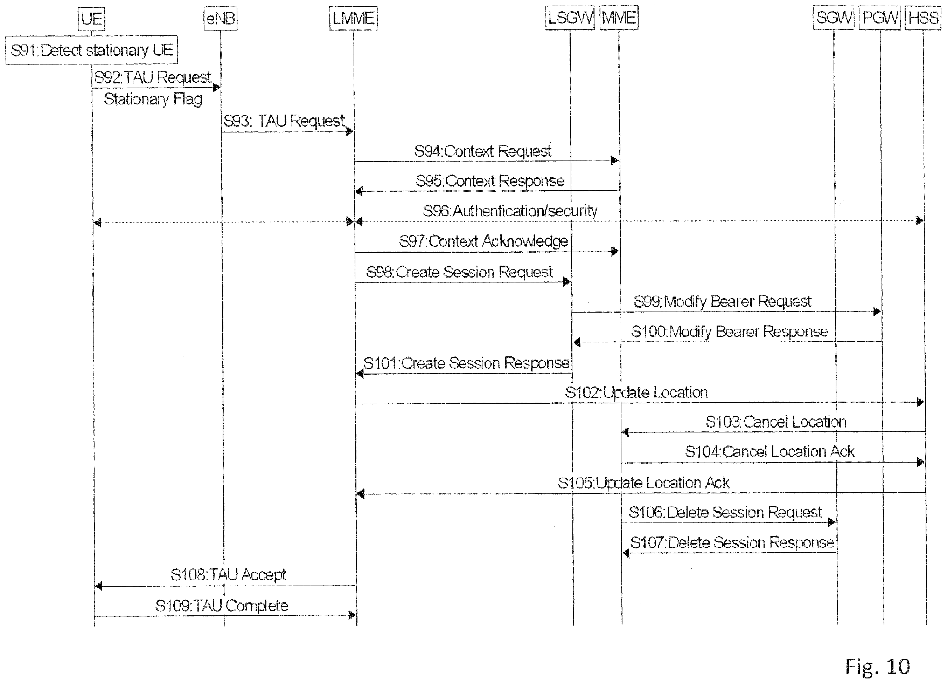

The signaling for the case when the UE becomes stationary in the idle mode in shown in Fig. 10.

Step S91: The UE detects that it has become stationary. This determination can be based on a number of criteria, e.g., that the UE has camped on the same cell for a threshold period of time.

It is possible that the network may give guidance for the UE to make the determination of stationarity. Such guidance can also include:
- Whether or not stationarity needs to be detected. This can be achieved by configuring a list of location parameters such as TAs or cells into the UE where this determination needs to be performed. Alternatively, the cells can broadcast an indication whether stationarity needs to be detected in the given cell or tracking area. As yet another alternative, RAN can also broadcast an identifier of the LMME in the LMME area; when this is present, the UE checks for stationarity. This approach is also useful to detect whether the UE is stationary within a given area comprises multiple cells or eNBs, ignoring any mobility that takes place between those cells, since the UE can make the determination of stationarity on how long it remains within a given LMME's area.
- Parameters and thresholds used for the determination of stationarity. This can be configured into the UE e.g., at network attachment, or while the UE is connected to the eNB, e.g., before it transitions to idle mode. In this way, the network can influence how the detection is made. Note that it can be possible to use different parameters for different types of UEs, such as smartphones, machine devices etc.

Step S92: When the UE detects that it is stationary, it initiates a Tracking Area Update (TAU) Procedure by sending a TAU Request message. This is a difference compared to current system procedures, where TAU is triggered by mobility rather than stationarity. The UE also includes a Stationary Flag in the TAU Request message. (Alternatively, a new message type may be defined instead of the use of the TAU Request.) The flag can be sent as a new parameter on RRC, or as a new parameter in the NAS TAU Request message which can also be interpreted by the eNB as the TAU Request message is not encrypted.

Step S93: The eNB detects that this TAU Request message is triggered by the detection of stationary UE due to the presence of the Stationary Flag in the message. The eNB selects a LMME. This selection is trivial in case there is only a single LMME; otherwise the eNB can select one out of multiple LMME, e.g., using a random selection considering load balancing weights. The eNB forwards the TAU Request message to the selected LMME.

In case the Stationary Flag is present, but the UE already uses an LMME, then the eNB does not need to do re-select the LMME.

Steps S94-S97: Context is transferred from MME to LMME using existing system messages. It is possible for the LMME to re-authenticate the user, though not required.

Steps S98-S101: The LMME may decide to use a LSGW entity for the user plane, and in that case the user plane path is updated.

Steps S102-S107: The HSS is updated with the location of the LMME using existing system messages. The MME releases the old user plane node if necessary.

Step S108: TAU Accept assigns a new GUTI for the UE which includes the identity of the LMME as well. The LMME may also assign a new TA list if necessary, to make sure that the LMME has S1-CP connectivity to all eNBs in the TA list.

Step S 109: The UE acknowledges the assignment of the new GUTI.

### UE becomes mobile, idle mode

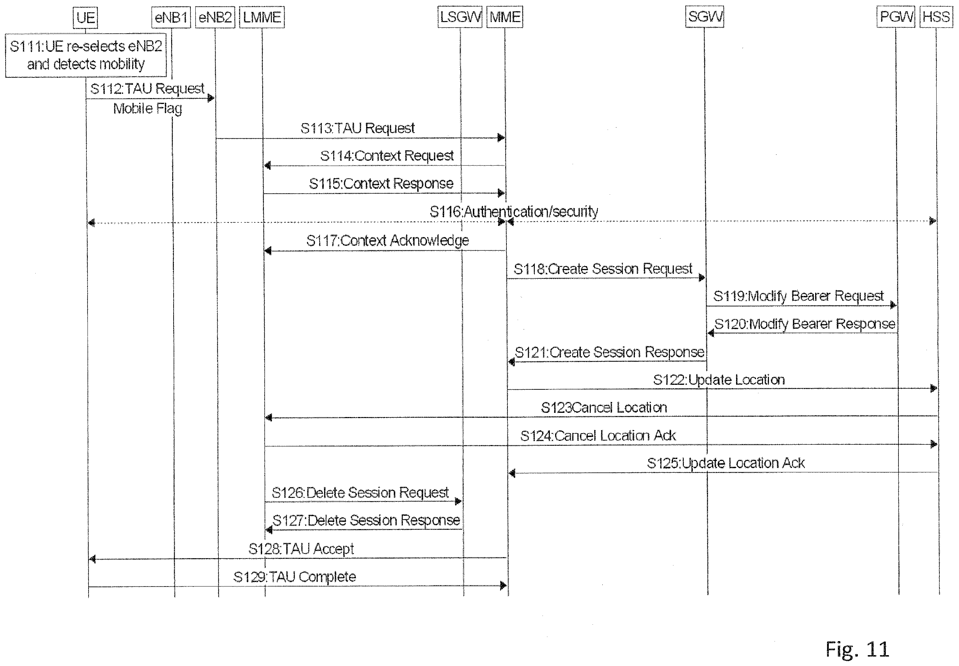

In case the UE becomes mobile and moves away in idle mode, it can go to a new TA which triggers a TAU procedure that relocates the MME using normal system procedures. (TS 23.401 section 5.3.3). However, it is possible that the UE becomes mobile yet it remains in the same TA (or remains within its TA list) and hence would not trigger a TAU procedure, in case of alternative 1 network setup. In this case, according to the invention, it is

useful to have an explicit trigger for the TAU procedure as shown in Step S 112 of Fig. 11. The other steps were explained in further detail in connection with one of the other message flows above, especially in connection with Fig. 10, so that a detailed explanation is omitted for the sake of clarity.

### UE becomes stationary, connected mode

In the case of connected mode, the UE can make a similar determination of whether it has become stationary and indicate it via the TAU procedure. Discussed above. Note though that the UE may use different parameters or criteria for determining stationary or mobile condition. The parameters may be downloaded from the network, e.g., during attachment or after transitions to connected mode.

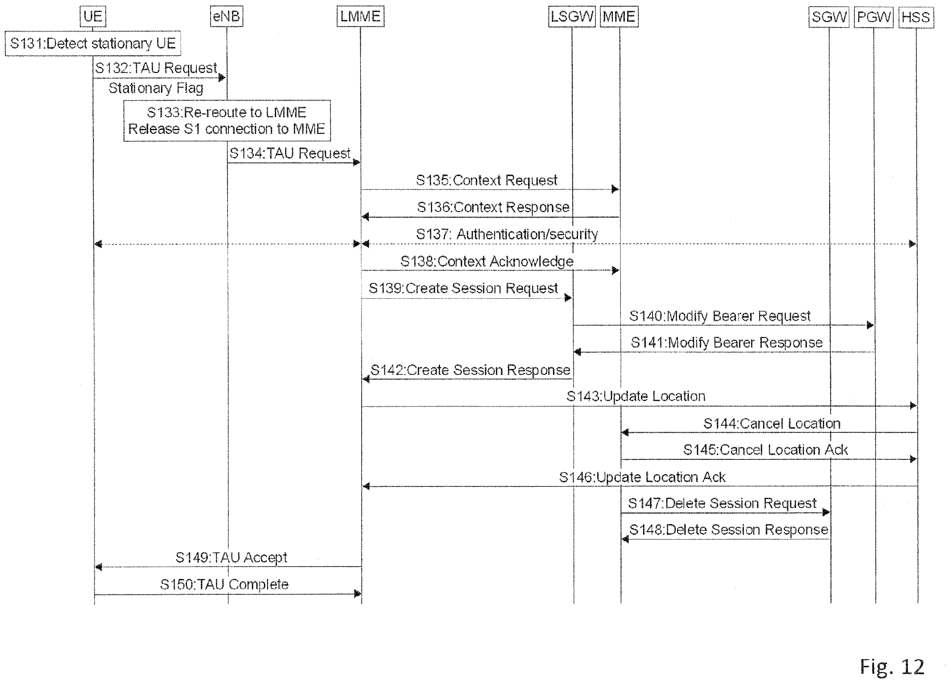

A difference is that in connected mode, there is an existing S1 connection which needs to be relocated for the new LMME. The procedure is illustrated in Fig. 12. In step S133, the eNB detects the presence of the Stationary Flag, and that the current S1 control plane connection is not towards a LMME, hence the eNB selects a LMME. The old S1 control plane connection is considered released; any signaling message from the MME arriving on that connection for the given UE will result in an error response. The eNB selects a new identifier eNB S1-AP UE id, which is sent in step S134 to the LMME. The LMME also selects a new identifier, LMME S1-AP UE id, which can be sent in step 19 to the eNB to complete the setup of the new S1 control plane connection. For the steps not discussed in detail reference is made to Fig. 10

### UE becomes mobile, connected mode

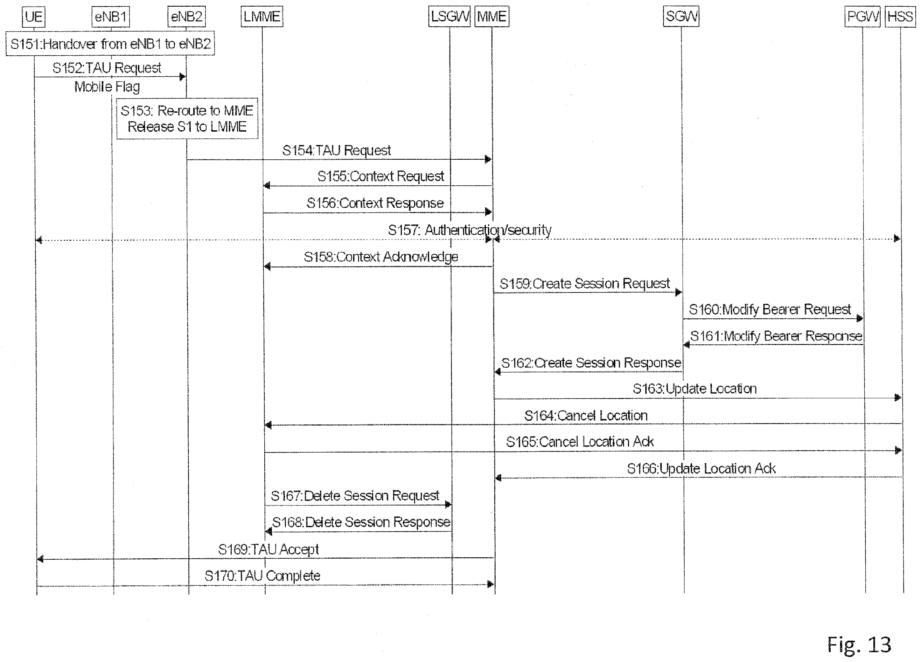

In case of connected mode, it is possible to use the existing S1 handover procedure to relocate both MME and the SGW for a UE which becomes mobile. The target eNB can detect that it is not in the original LMME's area and initiate S1 handover procedure. However, in case the UE moves within the same TA (network setup alternative 1), S1 handover is not applicable. In that case, the procedure shown in Fig. 13 is used, which is based on the UE triggering a TAU procedure with the Mobile Flag when it detects that it is no longer stationary. The procedure is similar to the one presented above especially to Fig.11, with the appropriate changes.

In today's mobile system architecture, the MME entity is identified by the GUMMEI (Globally Unique MME Identifier) which is part of the GUTI (Globally Unique Temporary Identifier) that is assigned to the UE. The GUMMEI includes the identifier of the network, MME Group Identifier of 16 bits in length, and a MME code of 8 bits in length. The MME Group Identifier is supposed to identify the group of MMEs the serve a given MME pool area, whereas the MME code is supposed to identify the MME within the group of MMEs in the pool area.

The existing identities could also be used for local control plane entities (LMME). A LMME, or a group of LMMEs deployed as a pool, can be assigned an MME Group Identifier of its own, and thereby the GUMMEI can uniquely identify both MMEs and LMMEs. However, in case a network has too many LMMEs, or if the GUMMEI identifier space is used for other purposes as well (e.g., for the definition of network slices, each optimized for a different business or usage scenario), then it could be possible that the 16 bits reserved for the MME Group Identifier is not sufficient. In that case, it could be considered to define a longer identifier space, allowing to use more MME Group Identifiers in a given network. Note however that the use of longer identifiers would have an impact also on RRC signaling in RAN in addition to the UE and CN entities.

One option to reduce the impact of a longer MME Group Identifier is to apply it only on the NAS (Non Access Stratum) level, whereas on the RRC level one (out of a range of) reserved local MME Group Identifier(s) would be used. An eNB can be configured to route messages to the local (group of) LMME(s) when the reserved local MME Group Identifier is used. In that way, it would not cause of problem if the reserved MME Group Identifier does not lead to a globally unique MME identifier in case of LMMEs. For the core network entities, the longer full MME Group Identifier would be available which is globally unique, and based on that it would be possible to find the LMME when necessary (e.g., in case of a Tracking Area Update procedure which is to relocate from a LMME to a central MME, in which case the central MME needs to find the LMME to fetch the context). In case an eNB routes a message to a wrong local LMME (such as in case a UE moves from one LMME area to another LMME area), this can be detected at the LMME using the longer NAS MME Group Identifier. The LMME can use the NAS longer MME Group Identifier to re-route the message to the proper MME. Re-routing the message is supported, e.g. using the Re-route command which sent to the eNB that is already specified.

One specific problem related to the use of identifiers is the case of transitions from idle to connected mode using the Paging and Service Request procedures, where the S-TMSI is used to identify the UE. The S-TMSI consists of the MME Code and the M-TMSI (i.e., the identifier of the UE within the MME). Even if two MMEs/LMMEs have different MME Group Identifiers, it would cause a problem if they have the same MME Codes and they can both potentially reach the same UE, since then two different UEs could have the same S-TMSI.

A possible solution to this S-TMSI problem is as follows.
- Reserve one or more MME Code values for LMME entities, which are not used for central MMEs. Therefore we guarantee that an MME and a LMME always have different MME Codes and hence use different S-TMSI ranges.
- The LMME areas of LMMEs with the same MME Code are non-overlapping. I.e., a local LMME pool has an LMME area that does not overlap with any neighbouring LMME pool's LMME area; or if they overlap then we use different MME Codes for those LMME pools. A UE which moves away from the LMME's area would always perform a Tracking Area Update and be registered at another MME node. In this way, we can ensure that the use of S-TMSI always uniquely identifies a single UE only.

Other approaches can also be possible such as extending the length of the MME Code.

The disclosure may be used to optimize communication protocols while the user is stationary. This is made possible by using different control plane entities for stationary terminals. When the control plane entity has been relocated for a stationary terminal, it may send an indication to the terminal and/or the access network about the stationary status. As a result, the protocol behavior may be different. Note that the terminal may be able to reject the change of protocol behavior. Also, in case the terminal has accepted the use of the protocol behavior change, it may revert back to the mobile protocol behavior even before it becomes mobile, and indicate this to the network using dedicated signaling.

As an example, stationary terminals may use a different protocol alternative for QoS settings or for session management.

This may make it easier to converge their fixed and mobile solutions. E.g., the operator may use the same protocols for both fixed networks and for stationary terminals in mobile networks, and in that way maximize the commonalities between fixed and mobile core networks. Such convergence may result in cost savings for the operator. Applying such convergence for the terminals that are stationary for a period of time may increase these cost savings.

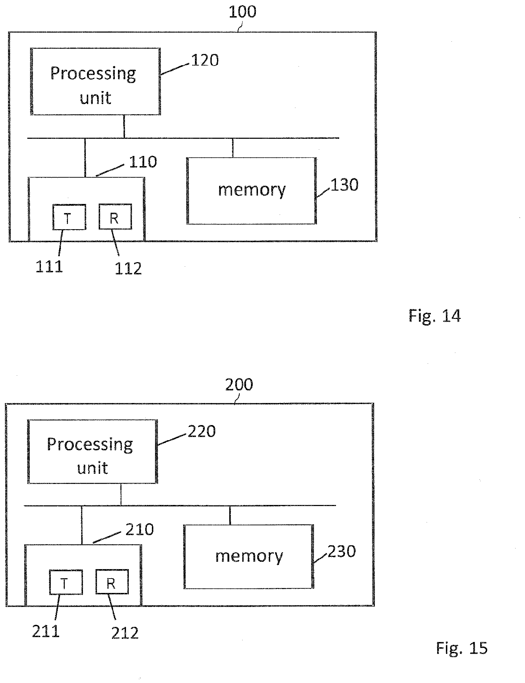

Figures 14 and 15 show a schematic architectural view of a mobile entity 100 and of a radio access node 200 respectively. The mobile entity 100 corresponds to the UE mentioned above in connection with the different flow charts and comprises an interface 110. The interface is provided for transmitting user data or control messages to other entities via a transmitter 111 and to receive user data and control messages from other entities using receiver 112. The interface is especially qualified to communicate with the different entities as shown in the different flow charts discussed above.

The interface 110 is furthermore configured for a wireless data exchange and for a wired data exchange. Furthermore, a processing unit 120 is provided which is responsible for the operation of the mobile entity. The processing unit 120 comprising one or more processors can carry out instructions stored on a memory 130 wherein the memory may include a read-only memory, a random access memory, a mass storage or the like. The memory can furthermore include suitable program code to be executed by the processing unit 120 so as to implement the above described functionalities of the mobile entity 100.

The radio access node 200 shown in Fig. 15 comprises an interface 210 configured for the communication with other nodes or entities such as the mobile entity 100 or any other nodes of the cellular system. An interface 210 is configured to exchange control messages and user data including a transmitted 211 and a receiver 212. A processing unit 220 is provided comprising one or more processors wherein the processing unit 220 is responsible for the operation of the radio access node 200. A memory 230 is provided which can include a read-only memory, a random access memory, a mass storage or the like. Memory 230 can include suitably configured program codes to be executed by the processing unit 220 so as to implement the above described functionalities in which the radio access node 200 is involved.

It should be noted that the structures illustrated in Figs. 14 and 15 are only schematic and that they may comprise further functional entities, which, for the sake of clarity, have not been illustrated.

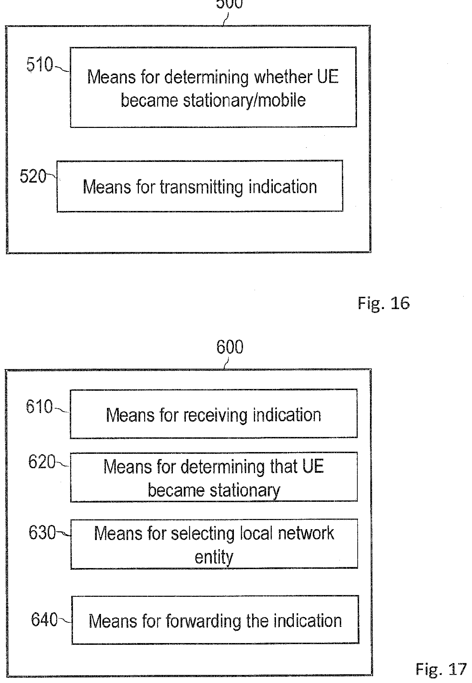

Fig. 16 shows a further embodiment of a mobile entity 500. The mobile entity comprises means 510 for determining whether the mobile entity has become stationary or mobile. The means 510 can operate as discussed above in connection with Fig. 10 to 13. Furthermore means 520 are provided which transmit an indication to the radio access network as shown in Fig. 10 to 13. The indication can indicate whether the mobile entity has become mobile or stationary.

Fig. 17 show an example of a radio access node 600. The access node comprises means 610 for receiving an indication, e.g. the indication sent by the mobile entity that is has become stationary. Furthermore means 620 are provided which determine that the mobile entity has become stationary. Means 630 are provided which determine and select a local network entity that will take over the control plane signaling as long as the mobile entity is stationary. Means 640 forward the indication to the local network entity.

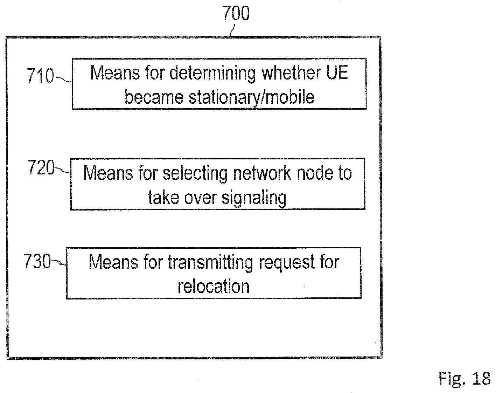

Fig. 18 shows a further example of a radio access node 700. The radio access node comprises means 710 for determining whether the mobile entity has become stationary or mobile. Means 720 are provided for selecting a network entity to take over signaling. When means 710 determined that the mobile entity became stationary, means 720 selects a local network entity for taking over the control plane signaling, when it was determined that the mobile entity became mobile again, means 720 selects a normal network entity and not a local one. Means 730 transmits a request for relocation to the selected network entity.

From the above discussed aspects, some general conclusions can be drawn:
As far as the mobile entity is concerned, the mobile entity will, for transmitting the indication, transmit a location update request message indicating that a control plane signaling entity towards the mobile entity (100) should be transferred from a currently used network entity to another network entity of the cellular network.

Furthermore, when the mobile entity determines that it has become stationary, it may compare a predefined parameter stored the mobile entity to a parameter value received from the cellular network. In this example the mobile entity itself determine whether it has become stationary, by way of example the mobile entity can have a time period parameter and when it has remained in the same cell for that time period, it is considered stationary. This can be applied to a single cell or bigger area.

For determining when the mobile entity becomes stationary the mobile entity can compare at least one location parameter received from the cellular network to a corresponding location parameter previously received from the cellular network it may determine that it has become stationary, when the compared location parameter does not change over the defined time period. By way of example a location area may be used as location parameter.

Additionally it is possible that the network provides an indicator that the mobile entity has become stationary. Here the mobile entity receives a network indicator from the cellular network that the mobile entity has become stationary and the mobile entity determines that it has become stationary based on the received network indicator.

The transmission of the indication may comprise the step of initiating a tracking area update procedure.

Furthermore the mobile entity may determine that it has become stationary in at least one of the following situations:
the mobile entity may receive a trigger from the cellular network triggering a step of determining whether the mobile entity has become stationary. In another option the mobile entity may compare at least one location parameter, e.g. the tracking area, received from the cellular network to at least one predefined location parameter present in the mobile entity. By way of example a list of tracking areas may be stored in the mobile entity where the determination needs to be made whether the mobile entity is stationary. In the first alternative mentioned above an indication, the trigger, is sent to the mobile entity, either alone or with the help of the cellular network.

When the mobile entity determines that it has become mobile again, the mobile entity will transmit a location update request message to a radio access indicating that a control plane signaling entity towards the mobile entity (100) should be transferred from a currently used network entity to another network entity of the cellular network.

The step of determining that the mobile entity has become mobile can comprise the step of comparing a location parameter received from the cellular network with a corresponding location parameter present the mobile entity and if the parameters do not coincide any more, the mobile entity can deduce that it is not stationary any more. Location parameter can be the tracking area or a similar parameter such as the location area in other cellular networks.

The mobile entity may determine that is has become mobile when the currently used control plane signaling entity is a local network entity that is only used for mobile entities as long as they are stationary.

Furthermore the mobile entity may receive an acceptance message from the other network entity to which the control plane signalling towards the mobile entity has been transferred. The mobile entity can then transmit a transfer complete message to the other network entity in response to the received acceptance message.

The indication may indicate that a non-access stratum signalling from the currently used network entity which is responsible for the nonaccess stratum signalling should be transferred to another network entity responsible for the non access stratum signalling of the cellular network.

The indication transmitted to the radio access network can indicate that the other network entity, to which the control plane signalling should be transferred is located closer to the radio access node to which the mobile entity is currently connected than the currently used network entity, particularly in the radio access network serving the mobile entity. This can be seen in Figs. 1 to 5.

As far as the radio access node is concerned when it is detected the mobile entity has become stationary, an existing connection between the mobile entity had the currently used network entity may be released.

Additionally, the local network entity can be identified using a network entity identifier which is only used to identify the local network entity in a non-access stratum signalling.

This local network entity may be identified using a network entity identifier which is taken from a first range of identifiers of an identifier range, wherein the first range from the identifier range is reserved for the local network entities only and is not used for network entities communicating with non-stationary mobile entities.

When the mobile entity detects that it has become stationary, it may have carried out one of the following steps:
it determines that an amount of time, the mobile entity is connected to the radio access node is longer than a predefined threshold. Furthermore an indication may be received that the mobile entity has become stationary from the currently used network entity which is responsible for the control plane signalling towards the mobile entity.

When the radio access node detects that the mobile entity has become mobile, it may have carried out one of the following steps:
the radio access node may determine that the mobile entity is currently connected to a network entity which is responsible for the control plane signalling towards the mobile entity and which belongs to a predefined set of local network entities responsible for the control plane signalling towards the mobile entity when the mobile entity has become stationary within the cellular network. Furthermore an indication may be received that the mobile entity has become mobile from the network entity responsible for the control plane signalling towards the mobile entity.

For stationary mobile entities - which can constitute a significant fraction of the terminals with active data traffic, - the solution discussed above offers a number of advantages via the possible co-location of RAN and CN entities, it:
- eliminates signaling overhead due to synchronization of connected/idle states between RAN and CN entities;
- simplifies system operation;
- reduces system processing capacity requirements;
- makes it easier to add new system features without having to co-ordinate between multiple products or vendors;
- achieves cost savings for the operator;
- for selecting stationary users, the solution automatically adjust to UE mobility patters without the need to set subscription based mobility limitations in advance.

The advantages can also be possible to realize if the RAN and CN entities are located close to each other though not co-located.

Yet another advantage of the invention is that it makes it easier to add system optimizations or simplifications for stationary terminals and use them also for the periods of time when a user is stationary, even if the UE may otherwise sometimes move. As operators look for ways to decrease their operating costs, they try to converge their mobile and fixed network solutions. In doing so, operators may choose to optimize the set of protocols used between the terminal and the CN, and also between the CN and the access network. For devices that do not move, it can be possible to use a set of protocols that are aligned between fixed and wireless accesses, which may bring operational gains. Using the invention, an operator switch to such optimized protocols when the terminal applies a local control plane entity. Note that for this, the use of the optimized protocol set may be indicated from the local CN entity towards the terminal and/or the access network.

## Claims

1. A method for operating a mobile entity (100) in a cellular network, comprising at the mobile entity:
- determining that the mobile entity (100) of the cellular network has become mobile within the cellular network,
- transmitting an indication to a radio access network of the cellular network indicating that the mobile entity has become mobile, wherein transmitting the indication comprises transmitting a tracking area update request to a radio access network node (200) indicating that a control plane signaling entity towards the mobile entity (100) should be transferred from a currently used network entity to another network entity of the cellular network even when the mobile entity remains in the same tracking area,
wherein the mobile entity determines that is has become mobile when the currently used control plane signaling entity is a local network entity that is only used for mobile entities as long as they are stationary.

2. The method according to claim 1, wherein determining that the mobile entity has become mobile comprises comparing a location parameter received from the cellular network with the corresponding location parameter present in the mobile entity and when the compared location parameters are not the same, the mobile entity determines that it has become mobile.

3. The method according to any of the preceding claims, further comprising:
- receiving an acceptance message from the other network entity to which the control plane signaling towards the mobile entity has been transferred
- transmitting a transfer complete message to the other network entity in response to the received acceptance message.

4. The method according to any of the preceding claims, wherein the indication indicates that a non-access stratum signaling from the currently used network entity which is responsible for the non-access stratum signaling should be transferred to another network entity responsible for the non-access stratum signaling of the cellular network.

5. A mobile entity (100) in a cellular network, the mobile entity comprising a memory (130) and at least one processor (120), the memory (130) containing instructions executable by said at least one processor (120), wherein the mobile entity is operative to carry out a method as mentioned in any of claims 1 to 4.

6. A computer program comprising program code to be executed by at least one processing unit (120, 220) of a mobile entity or a radio access node, wherein execution of the program code causes the at least one processing unit to execute a method according to any of claims 1 to 4.

## Patentansprüche

1. Betriebsverfahren für eine mobile Entität (100) in einem zellularen Netzwerk, umfassend an der mobilen Entität:
- Bestimmen, dass die mobile Entität (100) des zellularen Netzwerks innerhalb des zellularen Netzwerks mobil geworden ist,
- Senden einer Anzeige an ein Funkzugangsnetzwerk des zellularen Netzwerks, die anzeigt, dass die mobile Entität mobil geworden ist, wobei das Senden der Anzeige ein Senden einer Verfolgungsbereichsaktualisierungsanforderung an einen Funkzugangsnetzwerkknoten (200) umfasst, die anzeigt, dass eine Steuerebenen-Signalisierungsentität für die mobile Entität (100) von einer gegenwärtig verwendeten Netzwerkentität an eine andere Netzwerkentität des zellularen Netzwerk übertragen werden sollte, selbst wenn die mobile Entität im gleichen Verfolgungsbereich bleibt,
wobei die mobile Entität bestimmt, dass sie mobil geworden ist, wenn die gegenwärtig verwendete Steuerebenen-Signalisierungsentität eine lokale Netzwerkentität ist, die für mobile Entitäten nur verwendet wird, solange sie stationär sind.

2. Verfahren nach Anspruch 1, wobei das Bestimmen, dass die mobile Entität mobil geworden ist, ein Vergleichen eines Standortparameters, der vom zellularen Netzwerk empfangen wird, mit dem entsprechenden Standortparameter umfasst, der in der mobilen Entität vorhanden ist, und die mobile Entität bestimmt, dass sie mobil geworden ist, wenn die verglichenen Standortparameter nicht gleich sind.

3. Verfahren nach einem der vorhergehenden Ansprüche, ferner umfassend:
- Empfangen einer Annahmenachricht von der anderen Netzwerkentität, an welche die Steuerebenen-Signalisierungsentität für die mobile Entität übertragen wurde,
- Senden einer Übertragung-abgeschlossen-Nachricht an die andere Netzwerkentität in Reaktion auf die empfangene Annahmenachricht.

4. Verfahren nach einem der vorhergehenden Ansprüche, wobei die Anzeige anzeigt, dass eine Non-Access-Stratum-Signalisierung von der gegenwärtig verwendeten Netzwerkentität, die für die Non-Access-Stratum-Signalisierung verantwortlich ist, an eine andere Netzwerkentität übertragen werden sollte, die für die Non-Access-Stratum-Signalisierung des zellularen Netzwerks verantwortlich ist.

5. Mobile Entität (100) in einem zellularen Netzwerk, wobei die mobile Entität einen Speicher (130) und mindestens einen Prozessor (120) umfasst, wobei der Speicher (130) Anweisungen enthält, die von dem mindestens einen Prozessor (120) ausgeführt werden können, wobei die mobile Entität zum Durchführen eines Verfahrens nach einem der Ansprüche 1 bis 4 ausgelegt ist.

6. Computerprogramm, umfassend Programmcode, der von mindestens einer Verarbeitungseinheit (120, 220) einer mobilen Entität oder eines Funkzugangsknotens ausgeführt werden soll, wobei die Ausführung des Programmcodes die mindestens eine Verarbeitungseinheit zum Ausführen eines Verfahrens nach einem der Ansprüche 1 bis 4 veranlasst.

## Revendications

1. Procédé de fonctionnement d'une entité mobile (100) dans un réseau cellulaire, comprenant au niveau de l'entité mobile :
- la détermination que l'entité mobile (100) du réseau cellulaire est devenue mobile à l'intérieur du réseau cellulaire,
- la transmission d'une indication à un réseau d'accès radio du réseau cellulaire indiquant que l'entité mobile est devenue mobile, dans lequel la transmission de l'indication comprend la transmission d'une demande de mise à jour de zone de suivi à un nœud de réseau d'accès radio (200) indiquant qu'une entité de signalisation de plan de commande vers l'entité mobile (100) doit être transférée depuis une entité de réseau en cours d'utilisation à une autre entité de réseau du réseau cellulaire même lorsque l'entité mobile reste dans la même zone de suivi,
dans lequel l'entité mobile détermine qu'elle est devenue mobile lorsque l'entité de signalisation de plan de commande en cours d'utilisation est une entité de réseau local qui n'est utilisée pour des entités mobiles que lorsqu'elles sont immobiles.

2. Procédé selon la revendication 1, dans lequel la détermination que l'entité mobile est devenue mobile comprend la comparaison d'un paramètre d'emplacement reçu depuis le réseau cellulaire au paramètre d'emplacement correspondant présent dans l'entité mobile et, lorsque les paramètres d'emplacement comparés ne sont pas identiques, l'entité mobile détermine qu'elle est devenue mobile.

3. Procédé selon l'une quelconque des revendications précédentes, comprenant en outre :
- la réception d'un message d'acceptation depuis l'autre entité de réseau à laquelle la signalisation de plan de commande vers l'entité mobile a été transférée,
- la transmission d'un message de fin de transfert à l'autre entité de réseau en réponse au message d'acceptation reçu.

4. Procédé selon l'une quelconque des revendications précédentes, dans lequel l'indication indique qu'une signalisation de strate sans accès depuis l'entité de réseau en cours d'utilisation qui est responsable de la signalisation de strate sans accès doit être transférée à une autre entité de réseau responsable de la signalisation de strate sans accès du réseau cellulaire.

5. Entité mobile (100) dans un réseau cellulaire, l'entité mobile comprenant une mémoire (130) et au moins un processeur (120), la mémoire (130) contenant des instructions exécutables par ledit au moins un processeur (120), dans laquelle l'entité mobile est opérationnelle pour réaliser un procédé selon l'une quelconque des revendications 1 à 4.

6. Programme informatique comprenant un code de programme à exécuter par au moins une unité de traitement (120, 220) d'une entité mobile ou d'un nœud d'accès radio, dans lequel une exécution du code de programme amène l'au moins une unité de traitement à exécuter un procédé selon l'une quelconque des revendications 1 à 4.
